# FASCICULE DE BREVET EUROPEEN

(11) **EP 4 345 010 B1**
(45) Date de publication et mention de la délivrance du brevet: **30.07.2025**
(21) Numéro de dépôt: 23199832.9
(22) Date de dépôt: 26.09.2023
(51) Int. Cl.: B64D 37/30, F02C 7/22, B64D 37/32

(54) **ENSEMBLE PROPULSIF POUR AÉRONEF**
ANTRIEBSEINHEIT FÜR EIN FLUGZEUG
PROPULSION ASSEMBLY FOR AIRCRAFT

(30) Priorité: 30.09.2022 FR 2209992
(43) Date de publication de la demande: 03.04.2024
(73) Titulaire: Airbus, 31700 Blagnac (FR); AIRBUS OPERATIONS, 31060 Toulouse Cedex 9 (FR)
(72) Inventeur: MOGILKA, Philippe, 31700 BLAGNAC (FR); CZAPLA, Lionel, 31060 TOULOUSE (FR); PISSAVIN, Alexis, 31700 BLAGNAC (FR)
(74) Mandataire: Cabinet Le Guen Maillet

(56) Documents cités:
- EP-B1- 1 736 651
- DE-A1- 2 413 507
- US-A1- 2017 037 783
- US-A1- 2022 307 428
- US-B2- 9 790 862

## Description

### DOMAINE TECHNIQUE

La présente invention concerne un ensemble propulsif pour un aéronef, ledit ensemble propulsif comprenant un système de motorisation tel qu'un turbopropulseur, une canalisation de dihydrogène connectée à un réservoir de dihydrogène, un réseau de distribution de dihydrogène qui est connecté à la canalisation de dihydrogène et qui alimente la chambre de combustion du système de motorisation avec ledit dihydrogène au niveau d'injecteurs où le réseau de distribution comporte plusieurs canalisations disposées en parallèle les unes des autres autour de la turbine du système de motorisation. L'invention concerne également un aéronef comportant au moins un tel ensemble propulsif.

### ÉTAT DE LA TECHNIQUE ANTÉRIEURE

Afin de se déplacer, un aéronef comporte classiquement au moins un ensemble propulsif comprenant un système de motorisation tel qu'un turbopropulseur. Un tel système de motorisation comporte un noyau qui est enfermé dans un carter et qui comporte entre autres de l'amont vers l'aval, un compresseur, une chambre de combustion et une turbine. Le système de motorisation comporte également une hélice entraînée en rotation par le noyau. Le compresseur et la turbine possèdent chacun des aubes qui sont fixées à un arbre rotatif. L'ensemble propulsif comporte également un châssis qui est fixé à une structure de l'aile de l'aéronef et constitue ainsi un mât d'accrochage sous l'aile.

Pour limiter la pollution due à l'utilisation de kérosène, il est envisagé d'utiliser le dihydrogène comme carburant dans la chambre de combustion.

Ce dihydrogène est amené depuis un réservoir jusqu'à la chambre de combustion par une canalisation de dihydrogène qui s'étend au moins en partie dans l'ensemble propulsif. Du fait de la structure de l'ensemble propulsif et de sa position sous l'aile et sur l'avant de l'aile, la canalisation de dihydrogène traverse le châssis en provenant de l'aile et court ainsi de l'arrière vers l'avant jusqu' à la chambre de combustion.

Pour limiter l'impact de la température du noyau sur la canalisation de dihydrogène, celle-ci court à l'extérieur du carter pour rejoindre la chambre de combustion à travers le carter.

En cas d'incident sur le système de motorisation, il peut arriver que certaines aubes de la turbine ou du compresseur se détachent de l'arbre et, du fait de leur vitesse, elles traversent le carter au risque de couper la canalisation de dihydrogène.

Le document DE-A-24 13 507 divulgue un ensemble propulsif de l'état de la technique conforme au préambule de la revendication 1.

### EXPOSÉ DE L'INVENTION

Un objet de la présente invention est de proposer un ensemble propulsif qui comporte un réseau de plusieurs canalisations disposées en parallèles les unes des autres autour de la turbine. Ainsi, en cas de casse de tout ou partie d'une aube de la turbine, toutes les canalisations du réseau ne sont pas sectionnées simultanément ce qui permet de limiter la quantité de dihydrogène qui fuit.

À cet effet, est proposé un ensemble propulsif pour un aéronef comportant :
- une nacelle constituée de capots,
- un système de motorisation logé dans la nacelle, et comportant un noyau enfermé dans un carter et présentant une chambre de combustion et une turbine munie d'aubes rotatives autour d'un axe longitudinal,
- une canalisation d'alimentation destinée à acheminer du dihydrogène et serpentant à l'extérieur du carter jusqu'à l'arrière de la turbine,
- une rampe d'injecteurs arrangée autour du carter et de la chambre de combustion et équipée d'injecteurs qui plongent dans la chambre de combustion à travers le carter, et
- un réseau de distribution qui comporte plusieurs canalisations de dérivation réparties angulairement autour du carter, un collecteur arrière fluidiquement connecté à la canalisation d'alimentation et à chaque canalisation de dérivation et un collecteur avant fluidiquement connecté à chaque canalisation de dérivation et à la rampe d'injecteurs, où le collecteur arrière est à l'arrière de la turbine et le collecteur avant est à l'avant de la turbine.

Avec un tel arrangement, une aube de la turbine qui se détacherait partiellement ou entièrement ne va pas sectionner toutes les canalisations du réseau de distribution, ce qui permet de limiter la quantité de dihydrogène qui fuit. En outre, dans la mesure où les diamètres des canalisations du réseau de distribution sont plus petits que le diamètre de la canalisation de dihydrogène, en cas de rupture, le flux de dihydrogène libéré est plus faible et la concentration de dihydrogène reste réduite, en deçà de seuils admissibles.

Avantageusement, la turbine comporte plusieurs disques rotatifs et chaque disque comporte plusieurs aubes, et l'écart entre deux canalisations de dérivation voisines est au moins égal au tiers du diamètre du plus grand disque de la turbine.

Selon un mode de réalisation particulier, le collecteur avant est constitué par la rampe d'injecteurs et les collecteurs avant et arrière et les canalisations de dérivation sont logés à l'intérieur des capots de la nacelle.

Selon un mode de réalisation particulier, les collecteurs avant et arrière et les canalisations de dérivation sont disposés à l'extérieur des capots, la canalisation d'alimentation est logée à l'intérieur des capots et présente un décrochement radial qui traverse un des capots pour rejoindre le collecteur arrière, et l'ensemble propulsif comporte une canalisation de transfert qui relie fluidiquement le collecteur avant et la rampe d'injecteurs à travers un des capots de la nacelle.

Avantageusement, l'ensemble propulsif comporte un capot extérieur fixé sur l'extérieur des capots de la nacelle en englobant les collecteurs avant et arrière et les canalisations de dérivation, et l'ensemble propulsif présente une entrée d'air à l'avant du capot extérieur, entre ce dernier et les capots de la nacelle et une sortie à l'arrière du capot extérieur, entre ce dernier et les capots de la nacelle.

Avantageusement, l'ensemble propulsif comporte au moins une goulotte fixée au capot le plus extérieur et à l'intérieur de celui-ci, ladite au moins une goulotte s'étend sur au moins la longueur de la turbine et au moins une canalisation de dérivation est logée dans ladite au moins une goulotte.

L'invention propose également un aéronef comportant une aile, un réservoir de dihydrogène et au moins un ensemble propulsif selon l'une des variantes précédentes où l'ensemble propulsif est fixé sous l'aile et où la canalisation d'alimentation est fluidiquement connectée au réservoir de dihydrogène.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef comportant un ensemble propulsif selon l'invention,
Fig. 2 est une représentation schématique de côté et en coupe de l'ensemble propulsif selon l'invention avec son système de motorisation,
Fig. 3 est une représentation schématique et en perspective d'un ensemble propulsif selon un premier mode de réalisation de l'invention,
Fig. 4 est une représentation schématique en vue de dessus d'un ensemble propulsif selon un deuxième mode de réalisation de l'invention,
Fig. 5 est une représentation schématique et en perspective de l'ensemble propulsif de la Fig. 4,
Fig. 6 est une vue en coupe selon un plan normal à l'axe longitudinal X pour une première variante de réalisation de l'invention, et
Fig. 7 est une vue similaire à la Fig. 6 pour une deuxième variante de réalisation de l'invention.

### EXPOSÉ DÉTAILLÉ DE MODES DE RÉALISATION

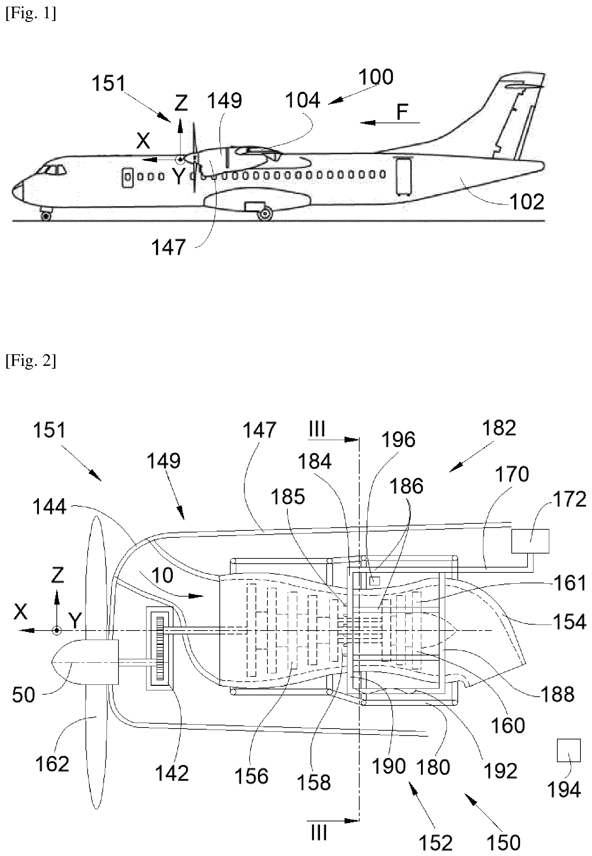

Dans la description qui suit, les termes relatifs à une position sont pris en référence à un aéronef en position d'avancement, c'est-à-dire comme il est représenté sur la Fig. 1 où la flèche F montre la direction d'avancement de l'aéronef.

Dans la description qui suit, et par convention, on appelle X l'axe longitudinal du système de motorisation qui est parallèle à l'axe longitudinal de l'aéronef orienté positivement vers l'avant dans le sens d'avancement de l'aéronef, on appelle Y l'axe transversal qui est horizontal lorsque l'aéronef est au sol, et Z l'axe vertical ou hauteur verticale lorsque l'aéronef est au sol, ces trois axes X, Y et Z étant orthogonaux entre eux.

La Fig. 1 montre un aéronef 100 qui présente un fuselage 102 de part et d'autre duquel est fixée une aile 104. Sous chaque aile 104 est fixée au moins un ensemble propulsif 151 qui comporte une nacelle 149 constituée de capots 147 formant une surface extérieure aérodynamique.

La Fig. 2 montre l'ensemble propulsif 151 qui comporte également un système de motorisation 150 qui est représenté de manière schématique. L'ensemble propulsif 151 comporte un châssis 180 qui assure la fixation de l'ensemble propulsif 151 à une structure de l'aile 104 et constitue un mât d'accrochage. Dans le mode de réalisation de l'invention présenté à la Fig. 2, le châssis 180 prend la forme d'une cage constituée, entre autres, de poutres fixées les unes aux autres. Le châssis 180 est fixé à la structure de l'aile par des moyens de fixation connus de l'homme du métier. Le châssis 180 et le système de motorisation 150 sont logés à l'intérieur de la nacelle 149.

Dans le mode de réalisation de l'invention présenté à la Fig. 2, le système de motorisation 150 est un turbopropulseur qui comporte un noyau 152 qui est enfermé dans un carter 154. Dans le mode de réalisation de l'invention présenté à la Fig. 2, le carter 154 est logé à l'intérieur du châssis 180 formant une cage et il y est fixé par tous moyens appropriés connus de l'homme du métier.

De l'air extérieur pénètre dans la nacelle 149 à travers une ouverture 144 prévue dans les capots 147 à l'avant de la nacelle 149.

À l'intérieur de la nacelle 149, le flux d'air primaire 10 pénètre dans le noyau 152 pour alimenter une chambre de combustion 158 en dioxygène

Le carter 154 est ainsi ouvert à l'avant pour permettre l'introduction du flux primaire 10 dans le noyau 152 et ouvert à l'arrière pour permettre l'échappement des gaz issus de la combustion à travers une tuyère. Le noyau 152 comporte de l'amont vers l'aval, un compresseur 156, une chambre de combustion 158 et une turbine 160. Le compresseur 156 et la turbine 160 sont munis d'aubes 161 rotatives autour de l'axe longitudinal X.

Le flux primaire 10 passe ainsi successivement à travers le compresseur 156 où il est comprimé avant d'être injecté dans la chambre de combustion 158 où il est mélangé au carburant. Les gaz issus de la combustion passent ensuite à travers la turbine 160 et l'entraînent en rotation. La turbine 160 entraîne alors à son tour le compresseur 156 en rotation et les gaz sont ensuite éjectés à l'arrière.

Dans le cas d'un turbopropulseur, le système de motorisation 150 comporte une hélice 162 qui est à l'avant et entraînée en rotation par la turbine 160. Dans le mode de réalisation de l'invention présenté ici, le système de motorisation 150 comporte également une boîte de vitesse 142 montée entre la turbine 160 et l'hélice 162 qui tourne autour d'un axe de rotation 50 parallèle à l'axe longitudinal X et qui est ici décalé par rapport à l'axe longitudinal X. L'ensemble propulsif 151 comporte également une canalisation d'alimentation 170 qui permet d'acheminer du dihydrogène depuis un réservoir de dihydrogène 172 de l'aéronef 100. La canalisation d'alimentation 170 serpente ainsi depuis l'arrière de la nacelle 149 à l'extérieur du carter 154 jusqu'à l'arrière de la turbine 160.

L'ensemble propulsif 151 comporte également une rampe d'injecteurs 184 arrangée autour du carter 154 et de la chambre de combustion 158 et équipée d'injecteurs 185 qui plongent dans la chambre de combustion 158 à travers le carter 154.

L'ensemble propulsif 151 comporte également un réseau de distribution 182 qui est fluidiquement connecté entre la canalisation d'alimentation 170 et la rampe d'injecteurs 184. Le réseau de distribution 182 comporte plusieurs canalisations de dérivation 186 qui sont réparties angulairement à l'extérieur du carter 154 autour de l'axe longitudinal X et s'étendent en parallèle les unes des autres le long de la turbine 160.

Le réseau de distribution 182 comporte un collecteur arrière 188 qui est fluidiquement connecté à la canalisation d'alimentation 170 et à chaque canalisation de dérivation 186 et un collecteur avant 190 qui est fluidiquement connecté à chaque canalisation de dérivation 186 et à la rampe d'injecteurs 184. Chaque collecteur 188, 190 prend la forme d'une canalisation qui est ici globalement en arc de cercle et qui s'inscrit dans un plan perpendiculaire à l'axe longitudinal X.

Le collecteur arrière 188 est à l'arrière de la turbine 160 et le collecteur avant 190 est à l'avant de la turbine 160 selon l'axe longitudinal X.

Ainsi, le dihydrogène arrive par la canalisation d'alimentation 170, se répartit à travers les canalisations de dérivation 186 au niveau du collecteur arrière 188 pour s'écouler le long de la turbine 160 avant de rejoindre le collecteur avant 190 et la rampe d'injecteurs 184 où il est injecté dans la chambre de combustion 158 par les injecteurs 185.

En cas d'incident sur le système de motorisation 150, il peut arriver que tout ou partie d'une aube 161 de la turbine 160 se détache et traverse le carter 154 au risque de couper certaines des canalisations de dérivation 186 qui passent près de la turbine 160. La présence de plusieurs canalisations de dérivation 186 réduit d'autant le risque qu'elles soient toutes sectionnées par l'aube161, ce qui permet de limiter la quantité de dihydrogène qui fuit. Il est ainsi préférable de mettre en place plus d'une canalisation de dérivation 186.

En outre, en multipliant le nombre de canalisations de dérivation 186, leur diamètre peut être réduit tout en assurant le passage d'un même volume de dihydrogène avec une seule canalisation de plus grand diamètre.

Le nombre de canalisations de dérivation 186 est au moins égal à deux, mais bien sûr un nombre plus important permet de réduire le risque que toutes les canalisations de dérivation 186 soient sectionnées. Il est également préférable d'espacer angulairement au mieux les canalisations de dérivation 186 pour maximiser l'espace entre deux canalisations de dérivation 186 voisines.

Classiquement, la turbine 160 comporte plusieurs disques rotatifs et chaque disque comporte plusieurs aubes 161. Généralement, lorsqu'une aube 161 se brise, la dimension la plus grande du débris est égale au tiers du diamètre du disque dont est issue ladite aube 161. Ainsi, préférentiellement, l'écart entre deux canalisations de dérivation 186 voisines est au moins égal au tiers du diamètre du plus grand disque de la turbine 160.

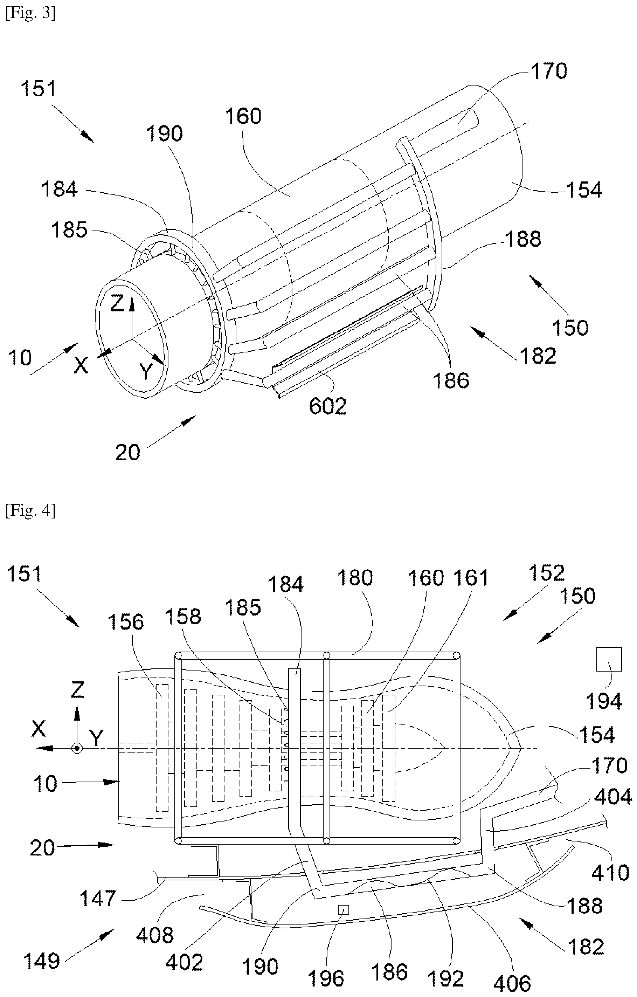

La Fig. 3 montre l'ensemble propulsif 151 selon un premier mode de réalisation de l'invention. La zone correspondant à la turbine 160 est matérialisée par les pointillés sur le carter 154.

Dans le mode de réalisation de l'invention représenté à la Fig. 3, le collecteur avant 190 est constitué par la rampe d'injecteurs 184 et chaque canalisation de dérivation 186 prend ici une forme en L dont la grande branche s'étend selon l'axe longitudinal X à partir du collecteur arrière 188 et dont la petite branche s'étend selon une direction radiale par rapport à l'axe longitudinal X pour rejoindre le collecteur avant 190.

Ce mode de réalisation est particulièrement intéressant lorsque les collecteurs avant et arrière 188 et 190 et les canalisations de dérivation 186 sont logés à l'intérieur des capots 147 de la nacelle 149.

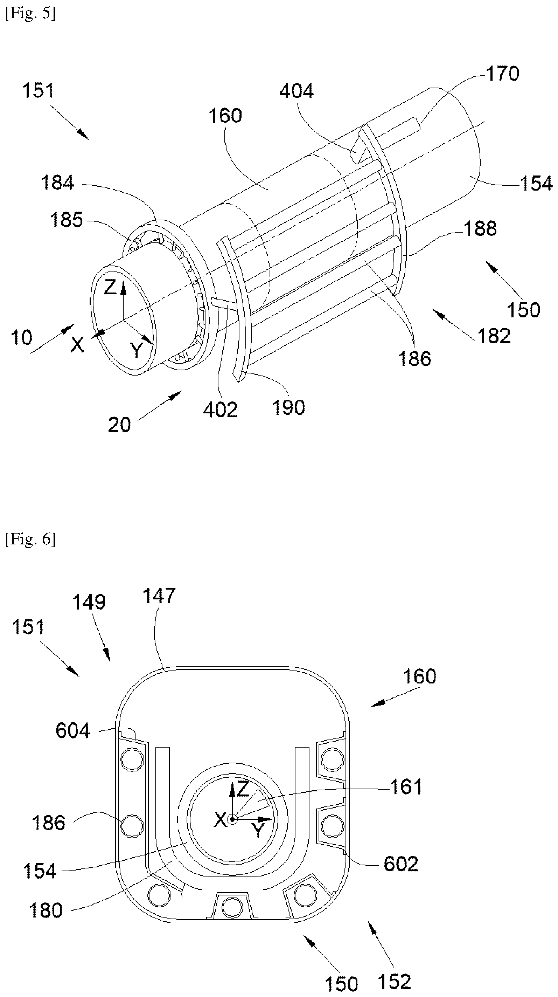

Dans le mode de réalisation de l'invention représenté à la Fig. 4 et à la Fig. 5, le collecteur avant 190 est distinct de la rampe d'injecteurs 184 et ils sont reliés entre eux par une canalisation de transfert 402 qui relie fluidiquement le collecteur avant 190 et la rampe d'injecteurs 184.

Ce mode de réalisation est particulièrement intéressant lorsque les collecteurs avant et arrière 188 et 190 et les canalisations de dérivation 186 sont disposés à l'extérieur des capots 147 de la nacelle 149.

Dans ce mode de réalisation, la canalisation d'alimentation 170 qui est logée à l'intérieur des capots 147 présente un décrochement radial 404 qui traverse un des capots 147 pour rejoindre l'extérieur des capots 147 et le collecteur arrière 188 et la canalisation de transfert 402 traverse à son tour un des capots 147 pour rejoindre l'intérieur des capots 147 et la rampe d'injecteurs 184. Il suffit ainsi d'un seul trou dans les capots 147 pour faire passer le décrochement radial 404 et un seul pour la canalisation de transfert 402.

Un tel arrangement permet en outre, en cas de fuite sur une des canalisations de dérivation 186, que le dihydrogène soit évacué à l'extérieur.

Pour améliorer l'aérodynamisme de l'ensemble propulsif 151, celui-ci comporte un capot extérieur 406 fixé sur l'extérieur des capots 147 de la nacelle 149 en englobant les collecteurs avant et arrière 188 et 190 et les canalisations de dérivation 186. L'ensemble propulsif 151 présente alors une entrée d'air 408 à l'avant du capot extérieur 406, entre ce dernier et les capots 147 de la nacelle 149 et une sortie 410 à l'arrière du capot extérieur 406, entre ce dernier et les capots 147 de la nacelle 149. Ainsi, l'air extérieur qui pénètre par l'entrée d'air 408 va entraîner l'éventuel dihydrogène vers la sortie d'air 410 en cas de fuite.

La Fig. 6 montre une protection complémentaire des canalisations de dérivation 186 qui est appliquée au mode de réalisation de la Fig. 3 mais qui peut également s'appliquer au mode de réalisation de la Fig. 4.

L'ensemble propulsif 151 comporte au moins une goulotte 602, 604 qui s'étend sur au moins la longueur de la turbine 160 et qui est fixée aux capots 147 de la nacelle 149 et à l'intérieur de ceux-ci. Dans le mode de réalisation de la Fig. 4, ladite au moins une goulotte 602, 604 est fixée au capot extérieur 406 et à l'intérieur de celui-ci. D'une manière générale, ladite au moins une goulotte 602, 604 est fixée au capot 147, 406 le plus extérieur et à l'intérieur de celui-ci.

Au moins une canalisation de dérivation 186 est logée dans ladite au moins une goulotte 602, 604. Ainsi, chaque canalisation de dérivation 186 est protégée de manière supplémentaire par la goulotte 602, 604 en cas d'éjection d'un débris depuis la turbine 160.

Sur la partie droite de la Fig. 6, il y a une goulotte 602 par canalisation de dérivation 186 et sur la partie gauche, il y a une seule goulotte 604 qui englobe toutes les canalisations de dérivation 186 en faisant le tour du châssis 180.

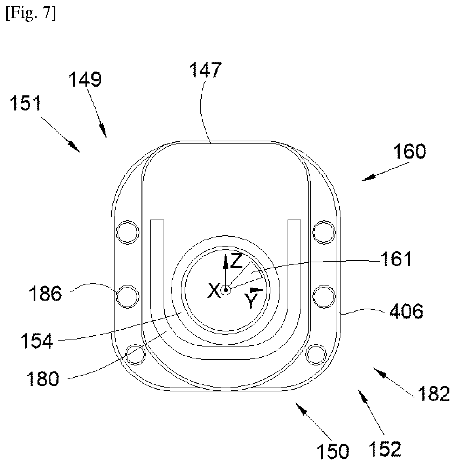

La Fig. 7 montre une coupe du mode de réalisation de la Fig. 4 où les canalisations de dérivation 186 sont logées entre les capots 147 de la nacelle 149 et le capot extérieur 406.

Selon un mode de réalisation particulier, l'ensemble propulsif 151 comporte au moins un détecteur de dihydrogène 196 qui est arrangé au voisinage des canalisations de dérivation 186 et connecté à une unité de contrôle 194 qui commande en allumage au moins un moyen d'allumage 192 qui est disposé au voisinage des canalisations de dérivation 186.

Ainsi, en fonction des données transmises par ledit au moins un détecteur 196, l'unité de contrôle 194 commande l'allumage dudit au moins un moyen d'allumage 192 (lorsque le dihydrogène est détecté).

Le moyen d'allumage 192 génère au moins une étincelle qui embrase le dihydrogène afin de le brûler sans qu'il explose. Ainsi, lorsque du dihydrogène est détecté par un détecteur de dihydrogène 196, l'unité de contrôle 194 commande le moyen d'allumage 192 pour qu'il génère une étincelle.

Bien que ce mode de réalisation particulier soit expliqué à partir du mode de réalisation de la Fig. 4, il s'applique de la même manière au mode de réalisation de la Fig. 3.

Pour limiter le débit de dihydrogène en cas de sectionnement d'une canalisation de dérivation 186, chacune est équipée d'un régulateur de débit.

Dans les modes de réalisation des Figs. 3 et 5, les canalisations de dérivation 186 et le collecteur arrière 188 sont uniquement disposés sur le côté bâbord mais il est possible d'arranger également des canalisations de dérivation 186 et un collecteur arrière 188 à tribord qui peut être commun ou distinct du collecteur arrière 188 à bâbord, dans ce dernier cas, comme cela est représenté aux Figs. 6 et 7, et il y a une canalisation d'alimentation 170 par collecteur arrière 188.

Dans le mode de réalisation de la Fig. 5, il y a uniquement un collecteur avant 190 à bâbord. Mais comme précédemment, il est possible d'arranger également un collecteur avant 190 à tribord qui peut être commun ou distinct du collecteur avant 190 à bâbord.

Dans les modes de réalisation des Figs. 3 et 5, il y a une seule rampe d'injecteurs 184 qui fait tout le tour du carter 154, mais il est également possible d'avoir deux rampes d'injecteurs 184 indépendantes, une à bâbord et une à tribord et il y a alors des canalisations de dérivation 186 à bâbord et à tribord pour alimenter chaque rampe d'injecteur 184.

Selon un mode de réalisation, l'unité de contrôle 194 comporte, reliés par un bus de communication : un processeur ou CPU (« Central Processing Unit » en anglais) ; une mémoire vive RAM (« Random Access Memory » en anglais) ; une mémoire morte ROM (« Read Only Memory » en anglais) ; une unité de stockage telle qu'un disque dur ou un lecteur de support de stockage, tel qu'un lecteur de cartes SD (« Secure Digital » en anglais) ; au moins une interface de communication, permettant par exemple à l'unité de contrôle de communiquer avec les détecteurs, les moyens d'allumage, etc.

Le processeur est capable d'exécuter des instructions chargées dans la RAM à partir de la ROM, d'une mémoire externe (non représentée), d'un support de stockage (tel qu'une carte SD), ou d'un réseau de communication. Lorsque l'équipement est mis sous tension, le processeur est capable de lire de la RAM des instructions et de les exécuter. Ces instructions forment un programme d'ordinateur causant la mise en œuvre, par le processeur, de tout ou partie des algorithmes et étapes décrits.

Tout ou partie des algorithmes et étapes décrits ci-après peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

## Revendications

1. Ensemble propulsif (151) pour un aéronef (100) comportant :
- une nacelle (149) constituée de capots (147),
- un système de motorisation (150) logé dans la nacelle (149), et comportant un noyau (152) enfermé dans un carter (154) et présentant une chambre de combustion (158) et une turbine (160) munie d'aubes (161) rotatives autour d'un axe longitudinal (X),
- une canalisation d'alimentation (170) destinée à acheminer du dihydrogène, et
- une rampe d'injecteurs (184) arrangée autour du carter (154) et de la chambre de combustion (158) et équipée d'injecteurs (185) qui plongent dans la chambre de combustion (158) à travers le carter (154),
l'ensemble propulsif (151) étant **caractérisé en ce que** la canalisation d'alimentation (170) serpente à l'extérieur du carter (152) jusqu'à l'arrière de la turbine (160) et **en ce que** l'ensemble propulsif (151) comporte un réseau de distribution (182) qui comporte plusieurs canalisations de dérivation (186) réparties angulairement autour du carter (154), un collecteur arrière (188) fluidiquement connecté à la canalisation d'alimentation (170) et à chaque canalisation de dérivation (186) et un collecteur avant (190) fluidiquement connecté à chaque canalisation de dérivation (186) et à la rampe d'injecteurs (184), où le collecteur arrière (188) est à l'arrière de la turbine (160) et le collecteur avant (190) est à l'avant de la turbine (160).

2. Ensemble propulsif (151) selon la revendication 1, **caractérisé en ce que** la turbine (160) comporte plusieurs disques rotatifs et chaque disque comporte plusieurs aubes (161), et **en ce que** l'écart entre deux canalisations de dérivation (186) voisines est au moins égal au tiers du diamètre du plus grand disque de la turbine (160).

3. Ensemble propulsif (151) selon l'une des revendications 1 ou 2, **caractérisé en ce que** le collecteur avant (190) est constitué par la rampe d'injecteurs (184) et **en ce que** les collecteurs avant et arrière (188, 190) et les canalisations de dérivation (186) sont logés à l'intérieur des capots (147) de la nacelle (149).

4. Ensemble propulsif (151) selon l'une des revendications 1 ou 2, **caractérisé en ce que** les collecteurs avant et arrière (188, 190) et les canalisations de dérivation (186) sont disposés à l'extérieur des capots (147), **en ce que** la canalisation d'alimentation (170) est logée à l'intérieur des capots (147) et présente un décrochement radial (404) qui traverse un des capots (147) pour rejoindre le collecteur arrière (188), et **en ce que** l'ensemble propulsif (151) comporte une canalisation de transfert (402) qui relie fluidiquement le collecteur avant (190) et la rampe d'injecteurs (184) à travers un des capots (147) de la nacelle (149).

5. Ensemble propulsif (151) selon la revendication 4, **caractérisé en ce qu'**il comporte un capot extérieur (406) fixé sur l'extérieur des capots (147) de la nacelle (149) en englobant les collecteurs avant et arrière (188, 190) et les canalisations de dérivation (186), et **en ce que** l'ensemble propulsif (151) présente une entrée d'air (408) à l'avant du capot extérieur (406), entre ce dernier et les capots (147) de la nacelle (149) et une sortie (410) à l'arrière du capot extérieur (406), entre ce dernier et les capots (147) de la nacelle (149).

6. Ensemble propulsif (151) selon la revendication 3 ou la revendication 5, **caractérisé en ce qu'**il comporte au moins une goulotte (602, 604) fixée au capot (147, 406) le plus extérieur et à l'intérieur de celui-ci, **en ce que** ladite au moins une goulotte (602, 604) s'étend sur au moins la longueur de la turbine (160) et **en ce qu'**au moins une canalisation de dérivation (186) est logée dans ladite au moins une goulotte (602, 604).

7. Aéronef (100) comportant une aile (104), un réservoir de dihydrogène (172) et au moins un ensemble propulsif (151) selon l'une des revendications précédentes, où l'ensemble propulsif (151) est fixé sous l'aile (104) et où la canalisation d'alimentation (170) est fluidiquement connectée au réservoir de dihydrogène (172).

## Patentansprüche

1. Antriebseinheit (151) für ein Luftfahrzeug (100), umfassend:
- eine Gondel (149), die aus Verkleidungen (147) besteht,
- ein Motorisierungssystem (150), das in der Gondel (149) aufgenommen ist und einen Kern (152) umfasst, der in einem Gehäuse (154) eingeschlossen ist und eine Brennkammer (158) und eine Turbine (160), die mit um eine Längsachse (X) drehenden Schaufeln (161) versehen ist, aufweist,
- eine Versorgungsleitung (170), die dazu bestimmt ist, Diwasserstoff zu leiten, und
- ein Einspritzdüsenverteilerrohr (184), das um das Gehäuse (154) und die Brennkammer (158) herum angeordnet ist und mit Einspritzdüsen (185) ausgestattet ist, die durch das Gehäuse (154) hindurch in die Brennkammer (158) eintreten,
wobei die Antriebseinheit (151) **dadurch gekennzeichnet ist, dass** sich die Versorgungsleitung (170) außerhalb des Gehäuses (152) bis zur Rückseite der Turbine (160) schlängelt und dass die Antriebseinheit (151) ein Verteilnetz (182) umfasst, das mehrere Abzweigleitungen (186) umfasst, die winklig um das Gehäuse (154) herum verteilt sind, einen hinteren Sammler (188), der fluidisch mit der Versorgungsleitung (170) und mit jeder Abzweigleitung (186) verbunden ist, und einen vorderen Sammler (190), der fluidisch mit jeder Abzweigleitung (186) und mit dem Einspritzdüsenverteilerrohr (184) verbunden ist, wobei der hintere Sammler (188) an der Rückseite der Turbine (160) ist und der vordere Sammler (190) an der Vorderseite der Turbine (160) ist.

2. Antriebseinheit (151) nach Anspruch 1, **dadurch gekennzeichnet, dass** die Turbine (160) mehrere drehende Scheiben umfasst und jede Scheibe mehrere Schaufeln (161) umfasst und dass der Abstand zwischen zwei benachbarten Abzweigleitungen (186) mindestens gleich einem Drittel des Durchmessers der größten Scheibe der Turbine (160) ist.

3. Antriebseinheit (151) nach einem der Ansprüche 1 oder 2, **dadurch gekennzeichnet, dass** der vordere Sammler (190) aus dem Einspritzdüsenverteilerrohr (184) besteht und dass die vorderen und hinteren Sammler (188, 190) und die Abzweigleitungen (186) innerhalb der Verkleidungen (147) der Gondel (149) aufgenommen sind.

4. Antriebseinheit (151) nach einem der Ansprüche 1 oder 2, **dadurch gekennzeichnet, dass** die vorderen und hinteren Sammler (188, 190) und die Abzweigleitungen (186) außerhalb der Verkleidungen (147) angeordnet sind, dass die Versorgungsleitung (170) innerhalb der Verkleidungen (147) aufgenommen ist und einen radialen Absatz (404) aufweist, der eine der Verkleidungen (147) durchquert, um den hinteren Sammler (188) zu erreichen, und dass die Antriebseinheit (151) eine Transferleitung (402) umfasst, die den vorderen Sammler (190) und das Einspritzdüsenverteilerrohr (184) durch eine der Verkleidungen (147) der Gondel (149) hindurch fluidisch verbindet.

5. Antriebseinheit (151) nach Anspruch 4, **dadurch gekennzeichnet, dass** sie eine äußere Verkleidung (406) umfasst, die an der Außenseite der Verkleidungen (147) der Gondel (149) befestigt ist, wobei sie die vorderen und hinteren Sammler (188, 190) und die Abzweigleitungen (186) umschließt, und dass die Antriebseinheit (151) einen Lufteinlass (408) an der Vorderseite der äußeren Verkleidung (406), zwischen dieser und den Verkleidungen (147) der Gondel (149), und einen Auslass (410) an der Rückseite der äußeren Verkleidung (406), zwischen dieser und den Verkleidungen (147) der Gondel (149), aufweist.

6. Antriebseinheit (151) nach Anspruch 3 oder Anspruch 5, **dadurch gekennzeichnet, dass** sie mindestens eine Rinne (602, 604) umfasst, die an der äußersten Verkleidung (147, 406) und innerhalb von dieser befestigt ist, dass sich die mindestens eine Rinne (602, 604) über mindestens die Länge der Turbine (160) erstreckt und dass mindestens eine Abzweigleitung (186) in der mindestens einen Rinne (602, 604) aufgenommen ist.

7. Luftfahrzeug (100), das eine Tragfläche (104), einen Diwasserstofftank (172) und mindestens eine Antriebseinheit (151) nach einem der vorhergehenden Ansprüche umfasst, wobei die Antriebseinheit (151) unter der Tragfläche (104) befestigt ist und wobei die Versorgungsleitung (170) mit dem Diwasserstofftank (172) fluidisch verbunden ist.

## Claims

1. Propulsive assembly (151) for an aircraft (100) comprising:
- a nacelle (149) composed of cowls (147),
- an engine system (150) housed in the nacelle (149), and comprising a core (152) enclosed in a casing (154) and having a combustion chamber (158) and a turbine (160) provided with blades (161) rotating about a longitudinal axis (X),
- a supply line (170) intended to convey dihydrogen, and
- an injector manifold (184) arranged around the casing (154) and the combustion chamber (158) and equipped with injectors (185) which dip into the combustion chamber (158) through the casing (154),
the propulsive assembly (151) being **characterized in that** the supply line (170) winds outside the casing (152) to the rear of the turbine (160), and **in that** the propulsive assembly (151) comprises a distribution network (182) which comprises several bypass lines (186) distributed angularly around the casing (154), a rear manifold (188) fluidically connected to the supply line (170) and to each bypass line (186) and a front manifold (190) fluidically connected to each bypass line (186) and to the injector manifold (184), in which the rear manifold (188) is at the rear of the turbine (160) and the front manifold (190) is at the front of the turbine (160).

2. Propulsive assembly (151) according to Claim 1, **characterized in that** the turbine (160) comprises several rotary discs and each disc comprises several blades (161), and **in that** the separation between two adjacent bypass lines (186) is at least equal to a third of the diameter of the largest disc of the turbine (160).

3. Propulsive assembly (151) according to one of Claims 1 and 2, **characterized in that** the front manifold (190) is composed of the injector manifold (184) and **in that** the front and rear manifolds (188, 190) and the bypass lines (186) are housed inside the cowls (147) of the nacelle (149).

4. Propulsive assembly (151) according to one of Claims 1 and 2, **characterized in that** the front and rear manifolds (188, 190) and the bypass lines (186) are disposed outside the cowls (147), **in that** the supply line (170) is housed inside the cowls (147) and has a radially angled section (404) which passes through one of the cowls (147) to rejoin the rear manifold (188), and **in that** the propulsive assembly (151) comprises a transfer line (402) which fluidically links the front manifold (190) and the injector manifold (184) through one of the cowls (147) of the nacelle (149).

5. Propulsive assembly (151) according to Claim 4, **characterized in that** it comprises an outer cowl (406) fixed onto the outside of the cowls (147) of the nacelle (149) by covering the front and rear manifolds (188, 190) and the bypass lines (186), and **in that** the propulsive assembly (151) has an air intake (408) at the front of the outer cowl (406), between the latter and the cowls (147) of the nacelle (149) and an outlet (410) at the rear of the outer cowl (406), between the latter and the cowls (147) of the nacelle (149).

6. Propulsive assembly (151) according to Claim 3 or Claim 5, **characterized in that** it comprises at least one gutter (602, 604) fixed to the outermost cowl (147, 406) and inside the latter, **in that** said at least one gutter (602, 604) extends over at least the length of the turbine (160) and **in that** at least one bypass line (186) is housed in said at least one gutter (602, 604).

7. Aircraft (100) comprising a wing (104), a dihydrogen tank (172) and at least one propulsive assembly (151) according to one of the preceding claims, in which the propulsive assembly (151) is fixed under the wing (104) and in which the supply line (170) is fluidically connected to the dihydrogen tank (172).
